# EUROPEAN PATENT APPLICATION

(11) **EP 2 018 919 A1**
(43) Date of publication of application: **28.01.2009**
(21) Application number: 07014779.8
(22) Date of filing: 27.07.2007
(51) Int. Cl.: B23B 51/08, B25B 15/00

(54) **Screwing bit**

(71) Applicant: Joker Industrial Co., Ltd., No. 64, Lane 651 Section 2 Chung-Yang Road Hsien Hsi Hsiang Changhua Hsien (TW)
(72) Inventor: Huang, Pang Ching, Bao Shan Dist Shanghai City (CN)
(74) Representative: Bohest AG Branch Ostschweiz

(57) **Abstract**

There is described a screwing bit (1) comprising an elongated shaft (2) of metal. The shaft (2) has a screwing end portion (3) which is shaped to match a specific drive design of a fastening element. An opposite end portion of the shaft (2) is shaped as an insertion shank (4) for insertion of the screwing bit (1) into a receptacle of a screwing bit holder or directly into the chuck of a power tool. The shaft (2) of the screwing bit (1) is provided with a drilling section (5), which extends in between the screwing end portion (3) and the insertion shank (4). At least in a part of its axial extension the drilling section (5) has at least one cutting edge (51), having a radial extension which is equal or greater than the greatest outer diameter of the screwing end portion (3).

## Description

The present invention relates to screwing bit in accordance with the precharacterizing clause of patent claim 1.

Screw fastenings are the most common fastenings besides the application of nails, rivets, roll pins, or welding, soldering, or gluing in order to hold objects together. The great advantage of screw fastenings over other types of fastenings is that a screw may be loosened or extracted when it is desired to undo the fastening. Modem screws employ a wide variety of drive designs in their heads, the most common screw drive designs being the slotted drive, the Phillips drive, and the hex drive. Also very common are the Torx and the Robertson drives. More specific screw drives include Pozidriv or spanner head drives. Some screws have heads designed to accommodate more than one kind of drive design. The most common of these is a combination of a slotted and Phillips drive design. But also other combinations have been employed.

Each one of the different drive designs requires a different kind of tool to drive in or extract the screw. The most common tool used to drive in most of the screws is the screwdriver. Every drive design, however, requires its specific screwdriver. In order to facilitate the handling of screws with different drive designs, screwing bits have been designed in accordance with the different types of drive designs, which may be used with special hand tools and in combination with power tools, such as, e.g., as a power drill or a power screwdriver, which power tools are increasingly being used by professionals as well as by do-it-yourself amateurs.

A screwing bit comprises an elongated shaft of metal, a screwing end portion of which is shaped to match a specific drive design. An opposite end portion of the shaft is shaped as an insertion shank, having a polygonal, often square or hexagonal, cross section in order to insert it into a receptacle of a screwing bit holder of a hand tool or of a power tool. Often the screwing bit or the bit holder are equipped with a magnet in order to retain the screwing bit once it has been inserted into the screwing bit holder.

From the prior art there are known types of screws which may be inserted directly into sheet metal, wood, plasterboard, aerated concrete and other like softer materials. In most applications, however, first a borehole must be drilled into the material into which a screw is to be screwed in. For that purpose the user needs a power drill which is equipped with a drill of the desired diameter. After the borehole has been established, the user needs another power tool, which is provided with a drill bit, that matches the drive design in the head of the screw he wishes to use for the fastening. For applications in softer materials, such as, e.g., plasterboard and board, very often cordless combi-power tools are used, which are driven by batteries or accumulators. The chuck of these combi-power tools is provided for the reception of a drill or of a screwing bit holder, into which a drill bit may be inserted. In order to establish a fastening first a borehole must be drilled. For that purpose a drill of the desired diameter must be inserted into the chuck of the combi-power tool. After the borehole has been drilled, the drill must be replaced with the screwing bit holder. Then, a drill bit which matches the drive design in the head of the screw must be inserted into the receptacle of the screwing bit holder. Care must also be taken, to select a screwing bit of the correct size for the drive design of the screw. Only then the screw can be screwed into the sidewalls of the borehole or into a dowel, which has been inserted into the borehole.

The switching of the power tool from a drilling tool to a screwing tool is both, inconvenient and time consuming for the user. This may not be regarded as a major disadvantage in situations, where first all boreholes can be drilled and only afterwards all the screws are screwed in. However, in some applications it might be necessary to screw in the fastening screw immediately after the borehole has been drilled, in order to secure an object to the underground. It is immediately apparent, that in such cases the constant change between the drill and the screwing bit holder is impractical. In order to avoid such cumbersome procedure the user is forced to use two power tools, one only for drilling, the other only for screwing operations. Now the user must care for two power tools and, unless he uses cordless accu-driven tools, two power lines or an electric extension cable having two or more sockets for the plugs of the power tools. It is apparent, that this solution too, is cumbersome and inconvenient for the user.

It is, accordingly, an object of the present invention to provide a remedy to these disadvantages in establishing screw fastenings in plaster board, or board, or aerated concrete and like softer materials. There is to be provided a solution to the aforementioned problems which results in a saving of time and which is more convenient to the user. The solutions shall be applicable also in combination with automatic screwing machines which are used in particular for establishing fastenings in plasterboard and board.

These and other objects of the present invention, which will become apparent hereinafter, are achieved with a screwing bit which is provided at least with the features that are listed in the characterising clause of patent claim 1. Preferred embodiments of the invention and/or further improvements thereof are subject of the dependent patent claims.

In accordance with the objects of the invention there is provided a screwing bit comprising an elongated shaft of metal. The shaft has a screwing end portion which is shaped to match a specific drive design of a screw, screw-in anchor, or fastening element. An opposite end portion of the shaft is shaped as an insertion shank for insertion of the screwing bit into a receptacle of a screwing bit holder or directly into the chuck of a power tool. The shaft of the screwing bit is provided with a drilling section, which extends in between the screwing end portion and the insertion shank. At least in a part of its axial extension the drilling section has at least one cutting edge, having a radial extension which is equal or greater than the greatest outer diameter of the screwing end portion.

By providing the screwing bit with a drilling section the screwing bit combines drilling and screwing functions in one tool. Using the screwing bit according to the invention, the necessity for the user to change between a drill and the screwing bit is removed. Also, there is no more need to carry two power tools, if the user wanted to avoid a multiple changing of the tools. Using the screwing bit according to the invention the user can drill the required borehole and insert and fasten the screw or a screw-in anchor in the borehole without any change of tools. The screwing end portion is matched to the drive design of the screw or screw-in anchor and its specific size. With the selection of the correct size of the screwing bit out of a set of bits, already the correct diameter of drilling section for the drilling of the borehole is guaranteed. There is no need for the user to carry any separate drilling tools with him. This results in a more convenient labour process and in a considerable saving of time.

Preferably the screwing head portion is hardened. Thus, it serves as a lead screw for the drilling section.

The screwing head portion of the screwing bit is shaped such, that it matches the drive design of the specific screw, screw-in anchor, or fastening element which is to be screwed into the borehole. Thus, in preferred embodiments of the invention the screwing head portion has a shape which matches drive designs of screw heads which are selected from the group consisting of slotted drive, Phillips drive, hex drive, Torx drive, Robertson drive, Pozidriv, Tri-wing drive, Torq-set drive, and spanner head drive. By selecting the shape of the screwing head portion in the described manner, it forms a counter part of the most common and of some more specific drive designs of screw heads.

A drilling section of the screwing bit must only be provided with one cutting edge to perform the desired cutting function. Preferably, however, the drilling section of the screwing bit comprises two or more cutting edges. This leads to a faster and better balanced cutting performance.

In a preferred embodiment of the screwing bit the cutting edges are lands which extend helically along the axial length of the drilling section and form the boundaries of helically extending flutes. In this embodiment the drilling section is shaped like an ordinary drill. The debris which forms during the cutting process is removed through the helically extending flutes. The drilling section having a shape which corresponds to that of an ordinary drill, a number of screwing bits may be readily stowed away in side by side configuration within a casing, such as, e.g., that of the power tool.

Preferably each cutting edge on the screwing bit is formed integrally with the drilling section of the shaft. In particular with the cutting edges being formed by helically extending lands, this embodiment is preferred over one in which the lands are formed of separate parts and are fastened, e.g. soldered of welded, to the shaft of the screwing bit. The integral formation of the lands with the shaft makes them less prone to damage during the drilling process and enables an easier and cheaper manufacture of the screwing bit.

In another embodiment of the screwing bit each cutting edge is provided on a piece of hardened steel or hard metal which protrudes radially from the drilling section of the shaft. Several pieces of hardened steel or hard metal may be embedded into the shaft. Other embodiments of the screwing bit include one or more pieces of hardened steel or hard metal, which is (are) set into the shaft such that its (their) side edges protrude from the shaft on diagonally opposite sides. Still further embodiments of the screwing bit in accordance with the invention include a combination of lands and one of more pieces of hardened steel or hard metal.

In an advantageous embodiment of the screwing bit there is provided an annular groove in the shaft which separates the drilling section from the insertion shank. The annular groove serves for a better transport and removal of the debris at the surface of the material the borehole is established in. In some embodiments of power tools the annular groove may also serve as a receptacle for additional locking means which are provided in the chuck of the power tool and are supposed to secure the screwing bit against axial loosening.

In order to transmit torque to the screwing bit according to the invention the insertion shank preferably is provided with one of a square and a hexagonal cross section. In further embodiments of the screwing bit the insertion shank can be provided with other means to transmit torque, such as, e.g., an SDS insertion shank.

The screwing bit according to the invention may be produced on metal cutting machines. For economic reasons, however, it is preferred to manufacture the screwing bit in a non-chip metal forming process, such as, i.e., in a cold forming process.

In order for the user to be prepared for the application of different kinds of screws or screw-in anchors with varying kinds and sizes of drive designs, a set of screwing bits according to the invention is assembled, including screwing bits of different sizes and having screwing head portions matching those of drive designs of the group consisting of slotted drive, Phillips drive, hex drive, Torx drive, Robertson drive, Pozidriv, Tri-wing drive, Torq-set drive, and spanner head drive.

The novel features of the present invention, which are considered as characteristic for the invention, are set forth in the appended claims. The invention itself, however, both to its construction and its mode of operation, together with additional advantages and objects thereof, will be best understood from the following detailed description of exemplary embodiments, when read with reference to the accompanying drawings, in which:
- Figs. 1 and 2: show schematically a screwing bit of the prior art and the required operations for establishing a fastening therewith;
- Fig. 3: shows a perspective view of a screwing bit in accordance with the invention;
- Figs. 4 - 6: show schematically drilling and screwing operations using a screwing bit in accordance with Fig. 3;
- Figs. 7 and 8: show schematically a variant of the screwing bit in accordance with Fig. 3;
- Figs. 9 and 10: show schematically an alternative embodiment of a screwing bit in accordance with the invention; and
- Figs. 11 - 12: show schematically a further embodiment of a screwing bit in accordance with the invention.

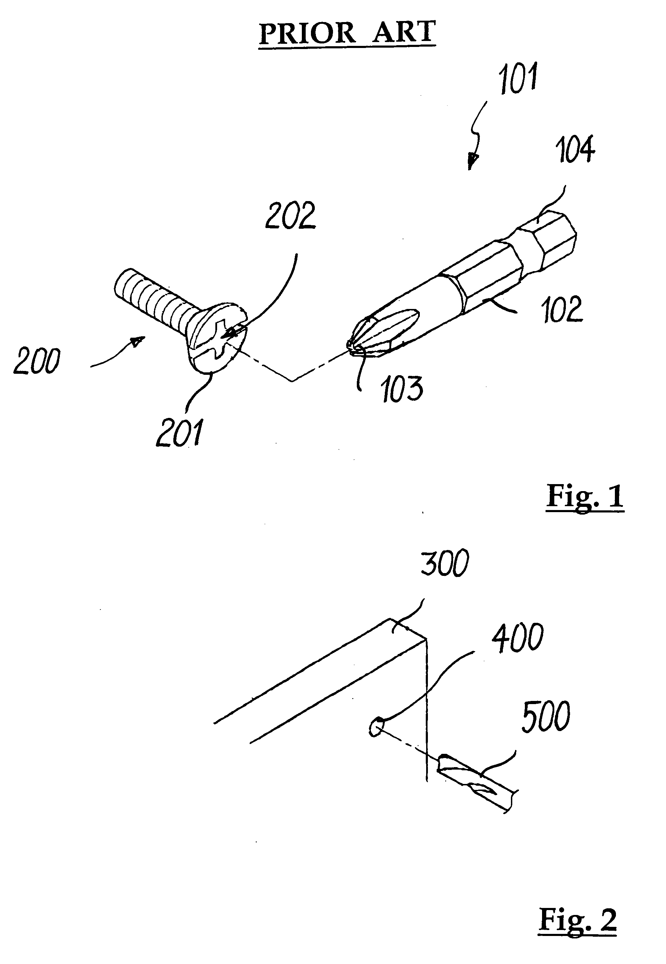

In Fig. 1 a screwing bit of the prior art is generally designated with reference numeral 101. The screwing bit comprises an elongated shaft 102 of metal, one end of which is shaped as a screwing end portion 103. The screwing end portion 103 can have different shapes, depending on the drive design 202 in the head 201 of a screw 200, it has to match in order to be able to transmit torque to the screw for screwing it into a receiving material. The drive design 202 can be e.g. a slotted drive, Phillips drive, hex drive, Torx drive, Robertson drive, Pozidriv, Tri-wing drive, Torq-set drive, a spanner head drive, or combinations thereof. In Fig. 1 the screw head 201 is provided with a combination of a slotted drive and of a Phillips drive. Thus, the screwing end portion 103 could have the shape of a flat screw driver or, like depicted in Fig. 1, that of a cross tip screwdriver matching the Phillips drive design. The opposite end portion if the shaft 102 is provided with an insertion shank 104 for inserting the screwing bit into a screwing bit holder or directly into the chuck of a power tool. The insertion shank 104 serves to transmit torque from the power tool to the screwing bit 101. For that purpose it is provided, e.g., with a polygonal cross-section. In the drawing of Fig. 1 the insertion shank 104 has a hexagonal cross-section.

In order to be able to screw in the screw 101 into a receiving material 300, like e.g., plasterboard, board, and other like softer materials, first a borehole 400 must be drilled, which is depicted schematically in Fig. 2. For the drilling of the borehole 400 a drill 500 is used, which must be inserted into the chuck of a power tool. Only after the borehole 400 has been drilled, the screw 101 can be screwed in. In order to accomplish the screwing function the drill 500 must be replaced with the screwing bit 101, or the power tool which is equipped with the drill 500 must be replaced with another power tool holding the screwing bit 101.

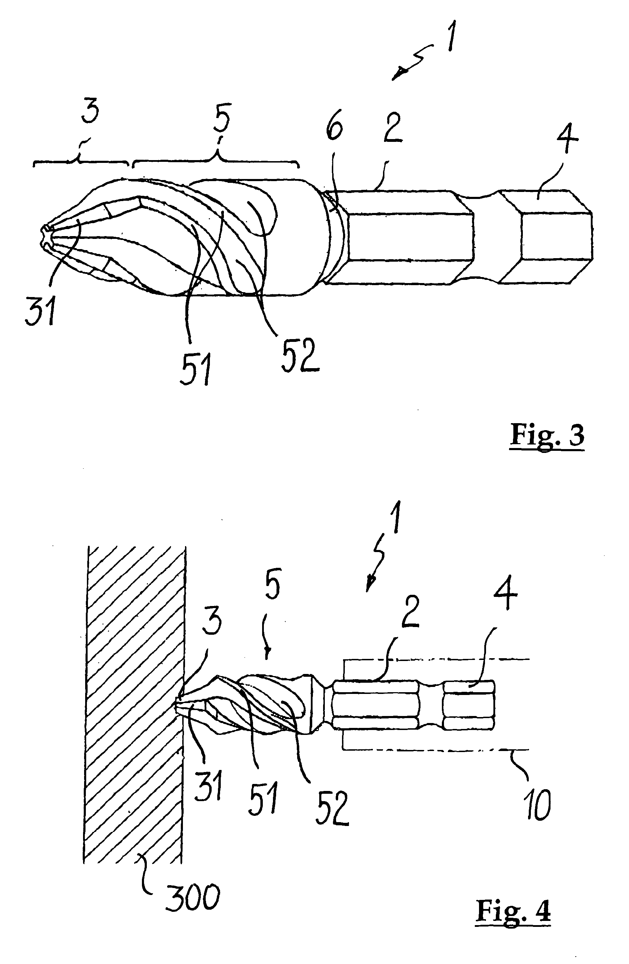

Fig. 3 shows a screwing bit according to the invention, which is generally designated with reference numeral 1. It comprises an elongated shaft 2 of metal, which is provided on one end thereof with a screwing end portion 3. The screwing end portion 3 can have different shapes, depending on the drive design in the head of a screw, a screw-in anchor, or a fastening element, it has to match. Like with the prior art screwing bits, the screwing end portion 3 is shaped to match a drive design selected from the group consisting of slotted drive, Phillips drive, hex drive, Torx drive, Robertson drive, Pozidriv, Tri-wing drive, Torq-set drive, and spanner head drive. In the embodiment shown in Fig. 3 the screwing end portion 3 is shaped to match a Phillips drive. At the opposite end of the shaft 2 the screwing bit is provided with an insertion shank 4, which has a hexagonal cross-section. The insertion shank of the screwing bit can also have other cross-sections or means for transmitting torque from the power tool to the screwing bit. So far the screwing bit 1 corresponds to the prior art screwing bits, such as the screwing bit depicted in Fig. 1.

The distinguishing feature of the screwing bit 1 according to the invention is a drilling section 5 which is arranged in between the screwing end portion 3 and the insertion shank 4. The drilling section 5 is provided with cutting edges which protrude radially from the shaft 2. The radial extension of the cutting edges is equal or greater than the greatest diameter of the screwing end portion 3. In the embodiment of Fig. 3 the cutting edges are formed by lands 51 which extend helically along the axial length of the drilling section 5. The lands 51 form the boundaries of flutes 52 which also extend helically along the drilling section 5. In the depicted embodiment of the screwing bit 1 the flanks 31 of the cross tipped screwing end portion 3, which matches the Phillips drive, merge into the lands 51 of the drilling section. Thus, the screwing end portion 3 forms a lead screw for the drilling section 3. Preferably the screwing end portion 3 is hardened. The lands 51 are formed integrally with the shaft 2 of the screwing bit 1. An annular groove 6 separates the drilling section 5 from the insertion shank 4. The screwing bit 1 is preferably manufactured in a non-chip metal forming process, such as, i.e., in a cold forming process.

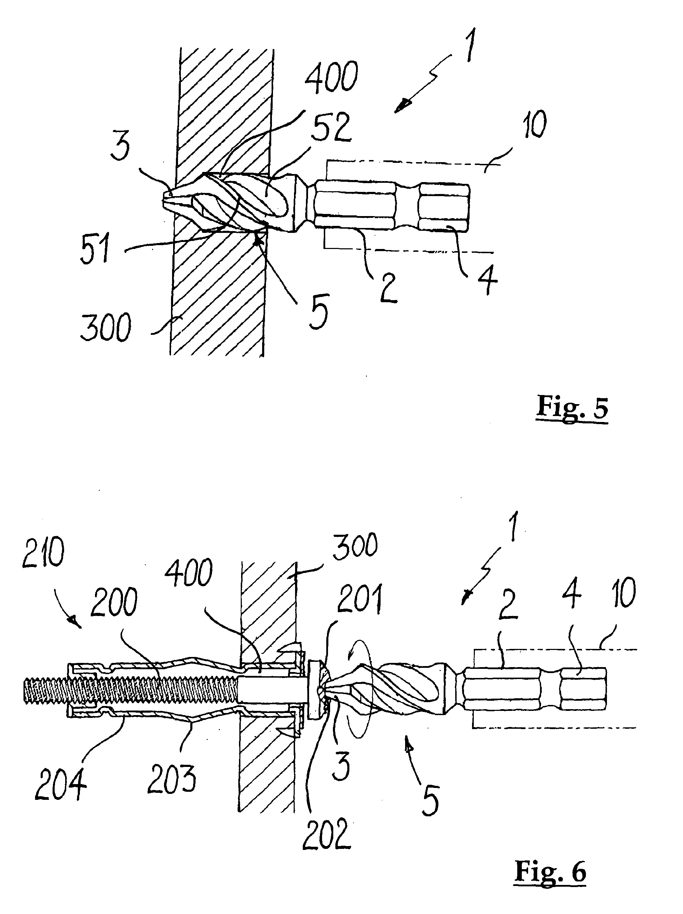

Figs. 4 - 6 show schematically the drilling and screwing functions of a screwing bit in accordance with the invention. The screwing bit 1 shown in the applications of Figs. 4 -6 corresponds to that depicted in Fig. 3 and is designated, accordingly, with reference numeral 1. Also like elements of the screwing bit 1 carry like reference numerals as in Fig. 3. If a user wishes to establish a fastening in a material 300, such as, e.g., plasterboard, board, aerated concrete and like softer materials, usually he first must drill a borehole. For that purpose he does not need a drill, but rather the borehole can be drilled using the screwing bit 1 according to the invention. In Figs. 4 and 5 the drilling function of the screwing bit 1 is illustrated. The screwing bit is shown inserted into a chuck 10 of a power tool, which is not shown. The power tool can be a Power drilling machine or a combi screwing drilling tool, which may be a cordless tool. The screwing bit 1 may be inserted directly into the chuck of the power tool or into a screwing bit holder, which itself is held in the chuck of the tool.

Fig. 4 illustrates the situation at the beginning of the drilling process. The screwing end portion 3 of the shaft 2 of the screwing bit 1 protrudes slightly into the material 300, e.g. a plasterboard, into which the borehole is to be drilled. Thus, it 3 has the function of a lead screw for the drilling section 5 of the screwing bit. The lands 51 of the screwing section extend radially beyond the greatest diameter of the flanks 31 of the screwing end portion 3 and define the diameter of the borehole. Upon rotation (usually in clockwise direction) of the screwing bit 1 the lands 51 of the drilling section 5 engage with the material 300, and a borehole 400 having the desired width is drilled. The flutes 52 in the drilling section 5 support the transport of debris which created during the drilling process to the surface of the material 300. Fig. 5 depicts the situation almost at the end of the process of drilling the borehole 400, where the screwing end portion 3 of the screwing bit 1 already protrudes through the plasterboard 300.

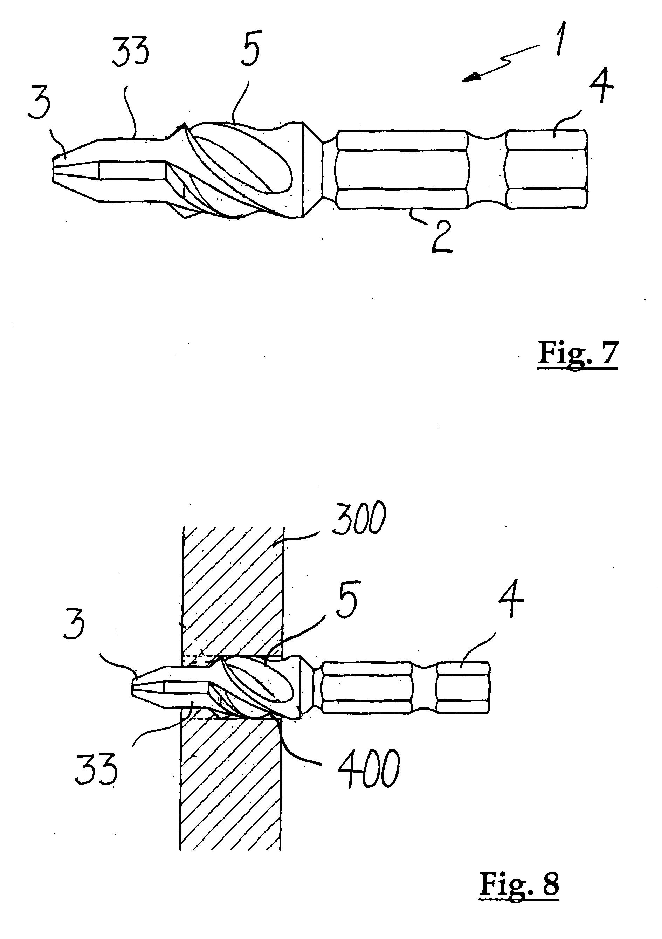

Immediately after the borehole 400 has been drilled a fastening element 210, such as, e.g., a cavity anchor, is inserted into the borehole 400. The fastening element 210 can be anchored within the borehole 400 using the power tool without having to change the screwing bit 1. Fig. 6 illustrates the screwing head portion 3 of the screwing bit 1 which is engaged with the matching drive design 202 in the head 201 of the fastening screw 200 of the fastening element 210. In Fig. 8 the illustrated drive design 202 is a Phillips drive, to which the cross tipped screwing head portion 3 is matched in design and in size. By rotation of the screwing bit 1 the fastening screw 200 of the fastening element 210 is rotated in clockwise direction. Thereby a metal sheet cage 204 is drawn towards the plasterboard 300, while its sidewalls are folded outwardly about joints 203.

While in Fig. 6 it is not illustrated, the fastening element 210 is used to fasten e.g. another construction part, a hanger, a clamp, etc., to the plasterboard 300. Also the application using a cavity anchor serves for illustration purposes only. The fastening element may be a screw-in anchor, a dry-wall screw, a dry-wall anchor, a wood screw which is screwed into a dowel, or like fastening elements for fastenings in softer materials, such as, e.g. plasterboard, board, wood, aerated concrete, e.g. Using the screwing bit according to the invention the user saves considerable time and the fastening process is much more convenient. The screwing bit combines drilling and screwing functions in one body. The screwing bits according to the invention may be provided in a set, including screwing bits of the most common if not all types of drive designs and different sizes thereof as well as of the diameters of the drilling sections.

Figs. 7 and 8 show a variant of the screwing bit in accordance with Fig. 3. In this particular embodiment the screwing head portion 3 and the drilling section 5 of the screwing bit 1 are separated by an elongated head shaft 33. This embodiment of the screwing bit has advantages in soft material where the elongated screwing head 3, 33 may be stuck into the material and provides a better guidance for the drilling section 5. Fig. 8 schematically shows the screwing bit 1 in the drilling operation. While the elongated screwing head 3, 33 protrudes almost completely through the soft material, the drilling section 5 of the screwing bit 1 is still in engagement with the material, thus, forming the borehole 400.

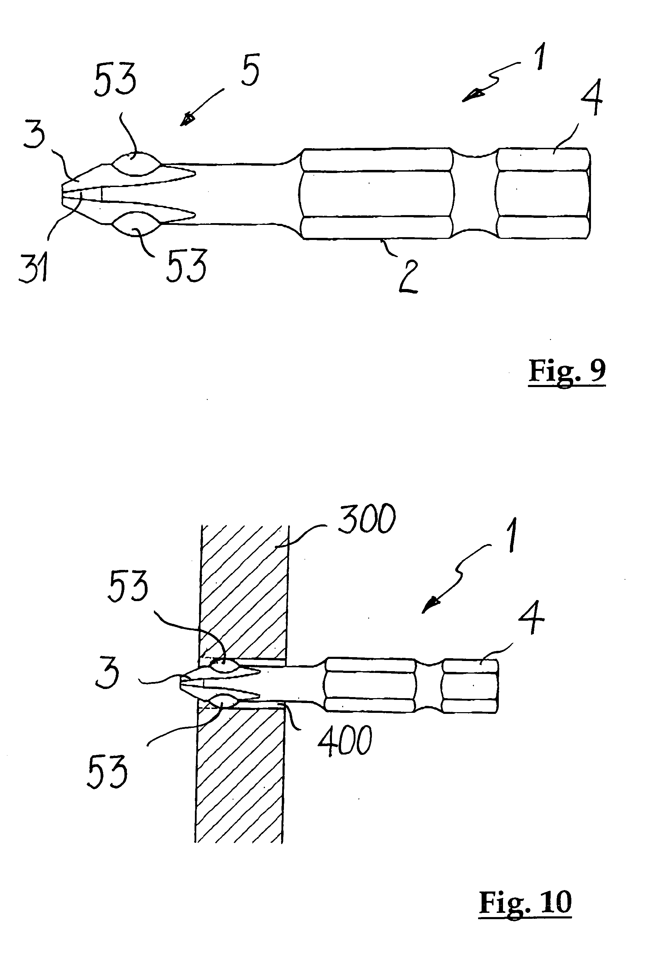

In Figs. 9 and 10 an alternative embodiment of the screwing bit is shown. The screwing bit is again designated with reference numeral 1. Like elements carry like reference numerals. In the depicted embodiment the cutting edges in the drilling section 5 are formed by ear-shaped material squeezings 53 on diagonally opposite sides of the shaft 2. The ear-shaped material squeezings 53 protrude radially beyond the greatest diameter of the screwing head portion 3. Instead of two ear-shaped material squeezings 53 there could also be provided three or four such squeezings in vicinity to the flanks 31 of the screwing head portion 3. Fig. 10 shows the alternative embodiment of the screwing bit 1 in the drilling operation. The ear-shaped material squeezings 53 act as cutting edges and drill a borehole 400 into the material 300.

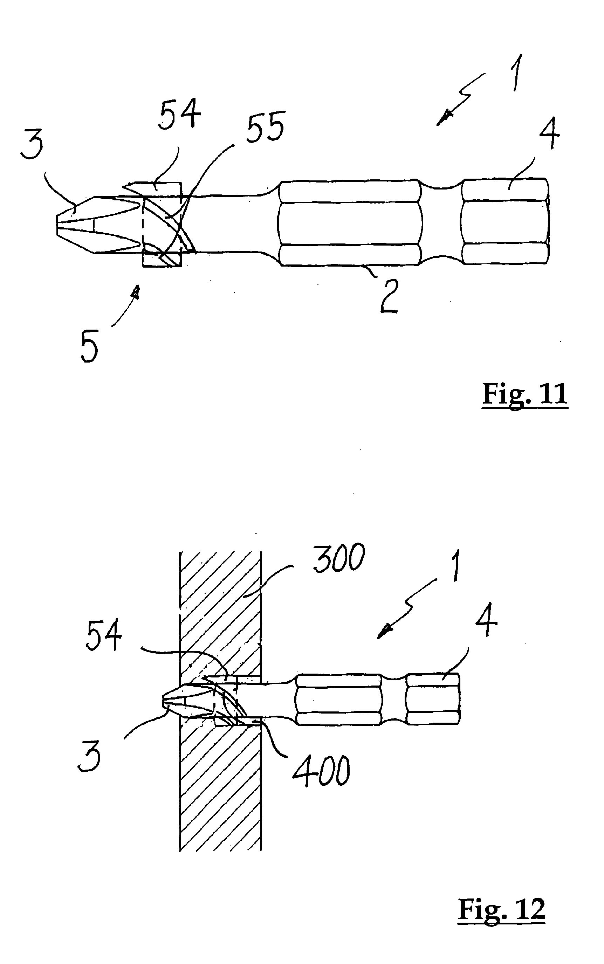

In Figs. 11 and 12 a further alternative embodiment of the screwing bit is depicted. The screwing bit again is designated with reference numeral 1. In the shown embodiment the cutting edges are formed by the radially protruding opposite ends of a piece of hard metal 54 or hardened steel, which is attached to or inserted into the shaft 2 in the drilling section 5. Flutes 55 may be provided in the piece of hard metal 54 and in the drilling section 5 of the screwing bit 1. In Fig. 12, finally, shows the screwing bit 1 in drilling operation. A borehole 400 is drilled in the material 300 by the radially protruding cutting edges of the hard-metal piece 54. The diameter of the borehole 400 is defined by the diameter of the drilling section 5 of the screwing bit, as measured across the radial extension of the hard metal piece 54.

Still further embodiments of the screwing bit may comprise drilling sections with cutting edges which are formed by pieces of hard metal or hardened steel which are attached to the surface of the shaft. Also combinations of lands and/ or cutting inserts and/or material squeezings etc. Thus, the depicted embodiments do not limit the scope of the invention, but only serve for illustration purposes of embodiments within the scope of the general inventive concept.

## Claims

1. A screwing bit comprising an elongated shaft (2) of metal, a screwing end portion (3) of which is shaped to match a specific drive design (202) of a fastening element (200) and having an opposite end portion which is shaped as an insertion shank (4), **characterised in that** the elongated shaft (2) comprises a drilling section (5), which extends in between the screwing end portion (3) and the insertion shank (4) and at least in a part of its axial extension has at least one cutting edge (51, 53, 54), having a radial extension which is equal or greater than the greatest outer diameter of the screwing end portion (3).

2. A screwing bit according to claim 1, wherein the screwing head portion (3) is hardened.

3. A screwing bit according to claim 1 or 2, wherein the screwing head portion (3) has a shape which matches drive designs (202) of screw heads which are selected from the group consisting of slotted drive, Phillips drive, hex drive, Torx drive, Robertson drive, Pozidriv, Tri-wing drive, Torq-set drive, and spanner head drive.

4. A screwing bit according to any one of the preceding claims, wherein the drilling section (5) comprises two or more cutting edges (51, 53, 54).

5. A screwing bit according to claim 4, wherein the cutting edges (51) are lands which extend helically along the axial length of the drilling section (5) and form the boundaries of helically extending flutes (52).

6. A screwing bit according to any one of the preceding claims, wherein each cutting edge (51, 54) is formed integrally with the drilling section (5) of the shaft (2).

7. A screwing bit according to any one of claims 1 - 4, wherein each cutting edge (53) is provided on a piece of hardened steel or hard metal which protrudes radially from the drilling section (5) of the shaft (2).

8. A screwing bit according to any one of the preceding claims, wherein there is provided an annular groove (6) in the shaft (2) which separates the drilling section (5) from the insertion shank (4).

9. A screwing bit according to any one of the preceding claims, wherein the insertion shank (4) is provided with one of a square and a hexagonal cross section.

10. A screwing bit according to any one of the preceding claims, **characterised in that** it is manufactured in a cold forming process.

11. A set of screwing bits according to any one of the preceding claims, including screwing bits (1) of different sizes and having screwing head portions matching those of drive designs of the group consisting of slotted drive, Phillips drive, hex drive, Torx drive, Robertson drive, Pozidriv, Tri-wing drive, Torq-set drive, and spanner head drive.
